# EUROPÄISCHE PATENTSCHRIFT

(11) **EP 4 446 714 B1**
(45) Veröffentlichungstag und Bekanntmachung des Hinweises auf die Patenterteilung: **14.01.2026**
(21) Anmeldenummer: 23167602.4
(22) Anmeldetag: 12.04.2023
(51) Int. Cl.: G01L 9/00, G01L 21/22

(54) **SENSOR ZUR MESSUNG VON ZWEI EIGENSCHAFTEN EINES GASES**
SENSOR FOR MEASURING TWO CHARACTERISTICS OF A GAS
CAPTEUR DE MESURE DE DEUX PROPRIETES D'UN GAZ

(43) Veröffentlichungstag der Anmeldung: 16.10.2024
(73) Patentinhaber: Deutsches Elektronen-Synchrotron DESY, 22607 Hamburg (DE); Universität Hamburg, 20148 Hamburg (DE)
(72) Erfinder: Reinhardt, Dr. Christoph, 22609 Hamburg (DE); Masalehdan, Hossein, 22547 Hamburg (DE); Lindner, Dr. Axel, 22607 Hamburg (DE); Schnabel, Prof. Dr. Roman, 30161 Hannover (DE)
(74) Vertreter: Patentanwälte Hemmer Lindfeld Frese Partnerschaft mbB

(56) Entgegenhaltungen:
- DE-T2- 69 625 404
- US-A1- 2005 126 295

## Beschreibung

Die vorliegende Erfindung betrifft einen Sensor zur gleichzeitigen Messung einer ersten Eigenschaft eines Gases und einer zweiten Eigenschaft des Gases.

Aus dem Stand der Technik sind verschiedenste Messverfahren und Sensoren bekannt, mit denen unterschiedliche Eigenschaften von Gasen und Gasgemischen bestimmt werden können. Bestehende Messverfahren und Messvorrichtungen haben jedoch verschiedene Nachteile und sind insbesondere nur für bestimmte Druckbereiche oder bestimmte Gastemperaturen geeignet. Daher muss beispielsweise ein geeigneter Sensor ausgewählt werden, um einen Druck in einem bestimmten Druckbereich zu messen. Für besonders geringe Gasdrücke, wie beispielsweise Ultrahochvakuum, ist die Messung des Gasdrucks zudem nur indirekt möglich. Auch bei tiefkalten bzw. kryogenen Gasen ist eine direkte Druckmessung in der Regel nicht möglich. Vielmehr wird hierzu ein Sensor außerhalb des Behälters mit dem tiefkalten Gas bei Raumtemperatur angeordnet, die mit dem tiefkalten Gas über ein dünnes Röhrchen fluidverbunden ist. Der Zusammenhang zwischen den Temperaturen und Drücken im tiefkalten Gas und am Sensor werden durch verschiedene analytische Formeln beschrieben, die vom erwarteten oder beobachteten Druckbereich abhängen.

Darüber hinaus stellt sich regelmäßig das Problem, dass die Sensoren bzw. Druckmessvorrichtungen bei Gasgemischen, die aus mehr als einem Gas bestehen, nur einen Druckwert ausgeben, der sich aus den Partialdrücken der unterschiedlichen Bestandteile des Gasgemisches zusammensetzt. Dabei wäre insbesondere bei Gasgemischen, die nur aus wenigen Komponenten bestehen, oftmals der Partialdruck der einzelnen Komponenten des Gasgemisches von großem Interesse.

DE 696 25 404 T2 offenbart ein mikromechanisches Druckmessgerät mit einem stationären Element und zumindest einem Vibrationselement. Das stationäre Element und das Vibrationselement umfassen jeweils eine Elektrode und werden mit einer Treiberspannung beaufschlagt, die das Vibrationselement in Schwingung versetzt. Die Höhe der Treiberspannung wird so eingestellt, dass die Amplitude des Vibrationselements konstant bleibt. Aus der Höhe der Treiberspannung kann auf den Druck eines Gases geschlossen werden, dass zwischen dem stationären Element und dem Vibrationselement ist.

US 2005/0126295 A1 offenbart ebenfalls einen Drucksensor mit einem stationären Element und einem Vibrationsanordnung. Indem an eine an dem stationären Element angeordnete Elektrode eine Spannung angelegt wird, wird die Vibrationsanordnung in Schwingungen mit vorbekannter Amplitude und Frequenz versetzt. Aus Abweichungen in der Frequenz und/oder der Amplitude der Schwingungen der Vibrationsanordnung kann ein Druck eines Gases bestimmt werden, das den Raum zwischen dem stationären Element und der Vibrationsanordnung ausfüllt.

Ausgehend von diesem technischen Hintergrund stellt sich dem Fachmann die Aufgabe, einen verbesserten Sensor zur Messung von Eigenschaften eines Gases anzugeben.

Die Aufgabe wird gelöst durch einen Sensor gemäß Anspruch 1. Bevorzugte Ausgestaltungen des Sensors sind Gegenstand der abhängigen Ansprüche.

Zur Lösung der Aufgabe ist ein Sensor zur gleichzeitigen Messung einer ersten Eigenschaft eines Gases und einer zweiten Eigenschaft des Gases mit einer nanomechanischen, vorgespannten Messmembran vorgesehen, wobei die Messmembran in dem Gas angeordnet und mit einem Substrat verbunden ist. Die Messmembran erstreckt sich in Ruhe in einer Membranebene, die in einem Koppelabstand parallel zu einer Koppelfläche verläuft. Sowohl auf einer der Koppelfläche zugewandten Messmembranoberfläche als auch auf einer von der Koppelfläche abgewandten Messmembranoberfläche ist die Messmembran mit dem Gas in Kontakt. Ein Koppelvolumen zwischen der Messmembran und der Koppelfläche ist mit einem Gas gefüllt und über zumindest eine Austauschöffnung mit einer Umgebung des Substrats verbunden, so dass durch die zumindest eine Koppelöffnung Gas zwischen dem Koppelvolumen und einer Umgebung des Sensors ausgetauscht werden kann. Der Koppelabstand zwischen der Messmembran und der Koppelfläche wurde so gewählt, dass aus einem Schwingungsverhalten der Messmembran die erste Eigenschaft des Gases und die zweite Eigenschaft des Gases bestimmt werden können.

Mit anderen Worten umfasst der erfindungsgemäße Sensor eine nanomechanische Messmembran, die unmittelbar in dem Gas angeordnet ist, dessen erste und zweite Eigenschaft parallel gemessen oder bestimmt werden sollen. Bei dem Gas kann es sich beispielsweise um ein reines Gas handeln, das nur aus einer Art von Teilchen besteht. Es ist aber auch möglich, zwei Eigenschaften eines Gasgemisches zu bestimmen, das aus mehreren Gasen besteht. Ein Beispiel für ein Gasgemisch ist Luft, die aus 78% Stickstoff, 20,94% Sauerstoff, 0,93% Argon und 0,04% Kohlenstoffdioxid besteht.

Welche mindestens zwei Eigenschaften des Gases mit dem Sensor bestimmt werden können, hängt von der Zusammensetzung des zu untersuchenden Gases ab. Besteht das Gas beispielsweise nur aus einer Sorte Teilchen, so können die Masse der Teilchen und auch der Druck der Teilchen bestimmt werden. Besteht das Gas hingegen aus zwei bekannten Bestandteilen, so können beispielsweise die Partialdrücke der beiden Bestandteile des Gases als erste und zweite Eigenschaft des Gases bestimmt werden. Handelt es sich hingegen um ein Gasgemisch aus mehr als zwei Gasen, so können beispielsweise die mittlere Masse und der mittlere Druck des Gases bestimmt werden.

Der Sensor umfasst eine nanomechanische Messmembran, die mit einem Substrat verbunden ist. Das Substrat kann beispielsweise ein Silicium-Chip sein, mit dem eine Siliciumnitrid (SiN)-Membran verbunden ist. Die Messmembran kann beispielsweise in einer Membranebene Abmessungen von 500 µm × 500 µm haben, während der Chip in der Membranebene Abmessungen von 6 mm × 6 mm bis 10 mm × 10 mm aufweisen kann. Senkrecht zur Membranebene weist die Messmembran vorzugsweise eine Dicke zwischen 5 nm und 1 µm auf. Weiter bevorzugt beträgt die Dicke der Messmembran senkrecht zur Membranebene 20 nm.

Die Messmembran ist mit dem Substrat verbunden und an diesem vorgespannt, d.h., durch die Verbindung zwischen Messmembran und Substrat wirken zumindest eine und vorzugsweise zwei oder mehr Zugspannungen auf die Messmembran. Die Zugspannungen können in einer beispielhaften Ausführungsform jeweils zwischen 1 MPa und 10 GPa betragen. Beispielsweise können in der Membranebene in vier unterschiedliche Richtungen Zugspannung von jeweils 1 GPa auf die Messmembran ausgeübt werden.

Die Messmembran erstreckt sich in Ruhe in einer Membranebene, die parallel zu einer Koppelfläche verläuft. Die Koppelfläche kann beispielsweise von einer zweiten Messmembran oder einem Substrat gebildet werden. Der Abstand zwischen der Koppelebene und der Koppelfläche, d.h., die kürzeste Distanz zwischen der Messmembran und der Koppelfläche, wird als Koppelabstand bezeichnet. Das von der Messmembran und der Koppelfläche auf gegenüberliegenden Seiten begrenzte Koppelvolumen ist mit dem Gas gefüllt, von dem zumindest zwei Eigenschaften mittels des Sensors bestimmt werden sollen. Damit ist die auf die Koppelfläche zuweisende Oberfläche des Sensors mit dem Gas in Kontakt.

Auch die Oberfläche des Sensors, die parallel zur Membranebene verläuft und von der Koppelfläche wegweist, ist mit dem Gas in Kontakt, dessen zwei oder mehr Eigenschaften bestimmt werden sollen, da auch die Umgebung des Sensors mit dem Gas gefüllt ist, also die Umgebung des Sensors bildet. Zusätzlich ist die gasgefüllte Umgebung des Sensors mit dem Koppelvolumen über eine oder mehrere Austauschöffnungen derart verbunden, dass Gas zwischen der Umgebung des Sensors und dem Koppelvolumen ausgetauscht werden kann. Koppelvolumen und Umgebung des Sensors sind somit fluidverbunden.

Die eine oder mehreren Austauschöffnungen können auf verschiedene Weise realisiert werden. Beispielsweise können eine oder mehrere Austauschöffnungen im Substrat ausgebildet sein oder Öffnungen im Übergang vom Substrat zur Messmembran können die Austauschöffnungen bilden, solange Gas zwischen der Umgebung des Sensors und dem Koppelvolumen hin und her fließen kann.

Schließlich ist der Koppelabstand zwischen der Messmembran und der Koppelfläche so gering gewählt worden, dass der Gasdruck und die Masse der Gasteilchen in dem Koppelvolumen das Schwingungsverhalten der Messmembran beeinflussen. Vorzugsweise ist der Koppelabstand größer oder gleich 10 nm und kleiner oder gleich 1 mm. Weiter vorzugsweise ist der Koppelabstand größer oder gleich 1 µm und kleiner oder gleich 100 µm.

Durch die Schwingung der Messmembran entsteht ein Druckgefälle zwischen dem Koppelvolumen und der Umgebung des Sensors, welches dafür sorgt, dass sich Gasteilchen periodisch zwischen dem Koppelvolumen und der Umgebung durch die eine oder mehrere Austauschöffnungen hin und her bewegen. Dies verstärkt die Schwingungsdämpfung, da durch die Bewegung der Gasteilchen Arbeit verrichtet wird, sodass besondere niedrige Gasdrücke gemessen werden können.

Der Druck des Gases und der von einer Schwingung der Messmembran angeregte Fluss der Gasteilchen durch die zumindest eine Austauschöffnungen verändern die Resonanzfrequenz der Messmembran und auch den mechanischen Qualitätsfaktor der Messmembran. Der Qualitätsfaktor ist umgekehrt proportional zur Dämpfungskonstante bzw. Abklingzeit von Schwingungen der Messmembran, also zwei (unabhängige) Parameter, die das Schwingungsverhalten der Messmembran charakterisieren. Daher können aus dem Schwingungsverhalten der Messmembran auch zwei (unabhängige) Eigenschaften des Gases, mit dem die Umgebung des Sensors und das Koppelvolumen gefüllt sind, bestimmt werden.

Der Sensor hat eine Vielzahl von Vorteilen. Beispielsweise kann derselbe Sensor über einen weiten Temperaturbereich von, z.B., -269°C bis > 300 °C verwendet werden. Es sind auch Ausführungen des Sensors denkbar, die für deutlich niedrigere und höhere Temperaturen geeignet sind. Wie bereits erwähnt, kann der Sensor mit besonders kompakten Abmessungen, beispielsweise ungefähr etwa 1 cm x 1cm x 1cm, realisiert werden, wobei jedoch auch deutlich kleinere Abmessungen im Bereich von wenigen Millimetern denkbar sind.

Die zwei oder mehr Eigenschaften des Gases können nicht nur über einen weiten Temperaturbereich, sondern auch über einen weiten Druckbereich von Ultrahochvakuum (UHV, < 1e-7 mbar) bis Raumdruck (1013 mbar) bis auf wenige Prozent genau bestimmt werden. Auch eine Verwendung des Sensors bei höheren Drücken bis zu ungefähr 100 bar ist möglich. Typischerweise müssen für diese Messbereiche Kombinationsmessröhren mit mehreren Drucksensoren verwendet werden, die auf verschiedenen Technologien basieren.

Zudem lässt sich das Schwingungsverhalten der Messmembran auf verschiedene Weisen auslesen. Beispielsweise ist eine optische Erfassung des Schwingungsverhaltens denkbar. Hierzu kann beispielsweise ein über eine optische Faser eingekoppelter Laser verwendet werden, was insbesondere im Ultrahochvakuum oder bei tiefkalten Temperaturen von Vorteil ist. Wird das Schwingungsverhalten optisch erfasst, sind zudem keine Metalle erforderlich. Alternativ ist auch eine elektronische Erfassung des Schwingungsverhaltens möglich, bei dem die Messmembran an externe elektromagnetische Felder gekoppelt wird. Hierzu kann beispielsweise eine kapazitive Koppelung verwendet werden, wie sie aus dem Bereich der MEMS-Mikrofone bekannt ist.

Vorzugsweise ist die Messmembran mittels zwei oder mehr Bändern mit dem Substrat so verbunden, dass zumindest eine Austauschöffnung zwischen der Messmembran und dem Substrat ausgebildet ist. Beispielsweise kann jeweils zwischen zwei benachbarten Bändern eine Austauschöffnungen vorgesehen sein, sodass die Anzahl der Austauschöffnungen, durch die Gas zwischen der Umgebung und dem Koppelvolumen fließen kann, zumindest der Anzahl der Bänder entspricht, über die die Messmembran mit dem Substrat verbunden und damit auch an dem Substrat vorgespannt ist. Vorzugsweise sind die Bänder gleichmäßig in der Membranebene verteilt, d.h., der Winkelabstand zwischen jeweils benachbarten Bändern ist identisch. Hierdurch wird eine gleichmäßige Vorspannung der Messmembran erreicht. Allerdings sind auch andere Verteilungen von Bändern denkbar.

In einer bevorzugten Ausführungsform ist die Messmembran mit vier Bändern mit dem Substrat verbunden, wobei sich jeweils zwei Bänder von gegenüberliegenden Enden des Sensors weg erstrecken. Mit anderen Worten wird die Messmembran mittels vier Bändern vorgespannt, wobei jeweils zwei Bänder Zugspannungen in der Membranebene in entgegengesetzte Richtung auf die Messmembran aufbringen. Beispielsweise kann der Winkelabstand zwischen direkt benachbarten Bändern jeweils 90° betragen. Dabei ist es bevorzugt, wenn eine von jedem der Bänder auf die Messmembran ausgeübte Zugspannung zwischen 1 MPa und 10 GPa beträgt. Vorzugsweise beträgt die von jedem der Bänder auf die Messmembran ausgeübte Zugspannung 1 GPa.

In einer weiter bevorzugten Ausführungsform kann der Koppelabstand verändert werden kann. Mit anderen Worten ist in der bevorzugten Ausführungsform vorgesehen, dass der Abstand zwischen der Messmembran und der Koppelfläche verändert werden kann, wobei die Veränderung vorzugsweise über eine geeignete Mechanik erfolgt, der Koppelabstand also mechanisch geändert werden kann. In einer beispielhaften Ausführungsform kann der Koppelabstand über einen Bereich zwischen 1 µm und 100 µm eingestellt werden. Hierfür geeignete Vorrichtungen, die auch für UHV und/oder besonders tiefen Temperaturen geeignet sind, können kommerziell erworben werden.

In einer bevorzugten Ausführungsform werden zur Bestimmung des Schwingungsverhaltens der Messmembran Schwingungen der Messmembran mittels eines Lasers erfasst, der beispielsweise mittels einer optischen Faser zu der Messmembran geleitet wird. Zur Bestimmung des Schwingungsverhaltens der Messmembran werden vorzugsweise Amplitude und Frequenz der Schwingungen der Messmembran erfasst, wobei zur Bestimmung des Schwingungsverhaltens weiter bevorzugt Amplitude und Frequenz mehrerer resonanter Schwingungsmoden erfasst werden. Alternativ oder ergänzt umfasst das Schwingungsverhalten mindestens eine Resonanzfrequenz der Messmembran und eine Dämpfung der Messmembran.

In einer bevorzugten Ausführungsform ist der Sensor so ausgestaltet, dass die Messmembran zur Bestimmung des Schwingungsverhaltens der Messmembran mechanisch und/oder mittels eines gepulsten Lasers angeregt wird. Eine mechanische Anregung der Messmembran kann beispielsweise erfolgen, indem der gesamte Sensor mit einer erwarteten Resonanzfrequenz der Messmembran bzw. einer Schwingungsmode der Messmembran angeregt wird. Wird der Sensor zur Messung von Eigenschaften eines Gases verwendet, das in einem geschlossenen Volumen wie beispielsweise einer Vakuumkammer enthalten ist, so kann zur mechanischen Anregung der Messmembran über die Wandung der Vakuumkammer erfolgen.

Alternativ oder ergänzend kann der Sensor auch so konfiguriert sein, dass das Schwingungsverhalten aus einer thermischen Anregung der Messmembran ermittelt werden kann. Aufgrund der Vorspannung der Messmembran am Substrat genügt die thermische Bewegung der Gasteilchen in dem Koppelvolumen und der Umgebung der Messmembran, um diese zum Schwingen anzuregen. Werden die Schwingungen über längere Zeiträume beobachtet, können die Resonanzfrequenzen der Schwingungsmoden abgeschätzt und aus der Breite der Frequenzspektren der Q-Faktor abgeleitet werden. Diese Ausführungsform kommt auf besonders vorteilhafte Weise ohne eine äußere Anregung der Messmembran aus.

In einer bevorzugten Ausführungsform ist die erste Eigenschaft eine mittlere Teilchenmasse der Teilchen des Gases und die zweite Eigenschaft ein Druck des Gases. Besteht das Gas nur aus einer Sorte von Gasteilchen, entspricht die mittlere Teilchenmasse der Teilchenmasse der Gasteilchen. Wenn das Gas aus einem ersten Partialgas und einem zweiten Partialgas besteht, kann in einer bevorzugten Ausführungsform die erste Eigenschaft ein Partialdruck des ersten Partialgases sein und die zweite Eigenschaft ein Partialdruck des zweiten Partialgases sein.

Es wird weiterhin bevorzugt, wenn die Koppelfläche von einer Oberfläche einer vorgespannten Koppelmembran gebildet wird, die mit einem Koppelsubstrat verbunden ist. Dabei kann das Koppelsubstrat dasselbe Substrat sein wie das Substrat, mit dem die Messmembran verbunden ist. Es kann allerdings auch ein zweites Substrat verwendet werden, das nicht notwendiger mit dem Substrat verbunden ist, an dem die Messmembran vorgespannt ist.

In der bevorzugten Ausführungsform umfasst der Sensor somit zwei Messmembranen, die das Koppelvolumen an gegenüberliegenden Seiten begrenzen. Insbesondere wenn die Messmembran und die Koppelmembran identisch ausgebildet sind, führt eine gekoppelte Schwingung der beiden Messmembranen zu einer erhöhten Sensitivität des Sensors. Daher ist es bevorzugt, wenn die Messmembran und die Koppelmembran im Wesentlichen identische Abmessungen aufweisen und weiter bevorzugt auch im Übrigen identische Eigenschaften aufweisen, also insbesondere aus dem gleichen Material gebildet und gleich vorgespannt sind. Entsprechend ist auch eine Ausgestaltung des Sensors denkbar, bei der die Messmembran und die Koppelmembran austauschbar sind, also wahlweise aus dem Schwingungsverhalten der Messmembran oder der Koppelmembran die erste und die zweite Eigenschaft des Gases bestimmt werden können.

Weiterhin ist es bevorzugt, wenn die Koppelmembran mittels zwei oder mehr Bändern so mit dem Koppelsubstrat verbunden ist, dass zumindest eine Austauschöffnung zwischen der Koppelmembran und dem Koppelsubstrat ausgebildet ist, durch die Gas zwischen dem Koppelvolumen und der Umgebung des Sensors ausgetauscht werden kann. Auch die übrigen im Hinblick auf die Messmembran beschriebenen Ausgestaltungen können entsprechend auf die Koppelmembran übertragen.

In einem beispielhaften bevorzugten Aspekt ist zudem ein Verfahren zur gleichzeitigen Bestimmung einer ersten Eigenschaft eines Gases und einer zweiten Eigenschaft eines Gases offenbart, bei dem ein Sensor gemäß einer der vorstehend beschriebenen Ausführungsformen derart in dem Gas angeordnet ist, dass das Koppelvolumen des Sensors und auf die vom Koppelvolumen wegweisende Oberfläche des Sensors in Kontakt mit dem Gas sind. Das Schwingungsverhalten der Messmembran wird erfasst und aus dem erfassten Schwingungsverhalten werden die erste Eigenschaft des Gases und die zweite Eigenschaft des Gases bestimmt.

In einer bevorzugten Ausführungsform des Verfahrens ist die erste Eigenschaft eine mittlere Teilchenmasse der Teilchen des Gases und die zweite Eigenschaft ein Druck des Gases. Besteht das Gas nur aus einer Sorte von Gasteilchen, entspricht die mittlere Teilchenmasse der Teilchenmasse der Gasteilchen. Wenn das Gas aus einem ersten Partialgas und einem zweiten Partialgas besteht, ist in einer bevorzugten Ausführungsform die erste Eigenschaft ein Partialdruck des ersten Partialgases sein und die zweite Eigenschaft ein Partialdruck des zweiten Partialgases sein.

Vorzugsweise wird im Rahmen des Verfahrens der Koppelabstand zwischen der Messmembran und der Koppelfläche verändert und das Schwingungsverhalten der Messmembran bei zwei unterschiedlichen Koppelabständen bestimmt. Aus dem Schwingungsverhalten der Koppelmembran bei den unterschiedlichen Koppelabständen können neben der ersten Eigenschaft des Gases und der zweiten Eigenschaft des Gases noch zwei weitere Eigenschaften des Gases bestimmt werden.

Weiter bevorzugt wird im Rahmen des Verfahrens das Schwingungsverhalten der Messmembran mittels eines Lasers erfasst, der beispielsweise mittels einer optischen Faser zu der Messmembran geleitet wird. Vorzugsweise werden mittels des Lasers Amplitude und Frequenz der Schwingungen der Messmembran erfasst, wobei zur Bestimmung des Schwingungsverhaltens weiter bevorzugt Amplitude und Frequenz mehrerer resonanter Schwingungsmoden erfasst werden. Alternativ oder ergänzt umfasst das Schwingungsverhalten mindestens eine Resonanzfrequenz der Messmembran und eine Dämpfung der Messmembran.

In einer bevorzugten Ausführungsform umfasst das Verfahren eine mechanische Anregung der Messmembran. Alternativ oder ergänzend wird die Messmembran mittels eines gepulsten Lasers angeregt.

In einer alternativen Ausführungsform wird das Schwingungsverhalten aus einer thermischen Anregung der Messmembran ermittelt. Mithin umfasst das Verfahren in dieser Ausführungsforme keine Anregung die Messmembran von außen.

Nachfolgend wird die vorliegende Erfindung bezugnehmend auf die Zeichnungen näher erläutert, wobei
- Figur 1: eine schematische Schnittansicht eines ersten Ausführungsbeispiels eines Sensors zur gleichzeitigen Bestimmung von zwei Eigenschaften eines Gases zeigt,
- Figur 2: eine schematische Schnittansicht eines zweiten Ausführungsbeispiels eines Sensors zur gleichzeitigen Bestimmung von zwei Eigenschaften eines Gases zeigt,
- Figur 3: eine schematische Schnittansicht eines dritten Ausführungsbeispiels eines Sensors zur gleichzeitigen Bestimmung von zwei Eigenschaften eines Gases zeigt,
- Figur 4: eine schematische Schnittansicht eines vierten Ausführungsbeispiels eines Sensors zur gleichzeitigen Bestimmung von mehr als zwei Eigenschaften eines Gases zeigt,
- Figur 5: eine schematische Schnittansicht eines fünften Ausführungsbeispiels eines Sensors zur gleichzeitigen Bestimmung von mehr als zwei Eigenschaften eines Gases zeigt,
- Figur 6: eine schematische Ansicht eines sechsten Ausführungsbeispiels einer Messmembran zur gleichzeitigen Bestimmung von zwei Eigenschaften eines Gases zeigt,
- Figur 7: eine schematische Ansicht eines siebten Ausführungsbeispiels einer Messmembran zur gleichzeitigen Bestimmung von zwei Eigenschaften eines Gases zeigt,
- Figur 8: eine schematische Darstellung einer ersten beispielhaften Messanordnung zur Erfassung des Schwingungsverhaltens einer Messmembran eines Ausführungsbeispiels eines Sensors zeigt,
- Figur 9: eine schematische Darstellung einer zweiten beispielhaften Messanordnung zur Erfassung des Schwingungsverhaltens einer Messmembran eines Ausführungsbeispiels eines Sensors zeigt und
- Figur 10: eine schematische Darstellung einer dritten beispielhaften Messanordnung zur Erfassung des Schwingungsverhaltens einer Messmembran eines Ausführungsbeispiels eines Sensors zeigt.

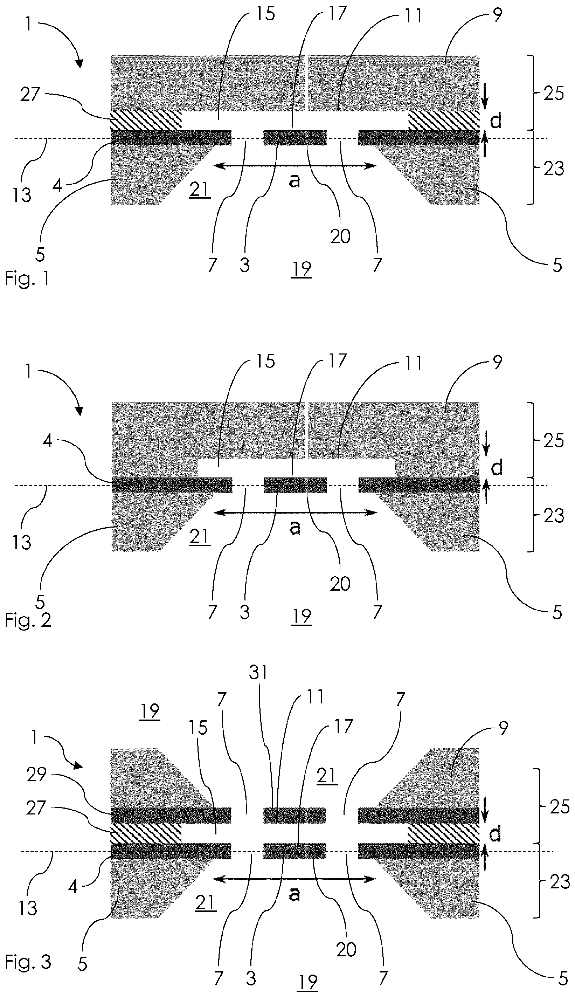

Figur 1 zeigt eine schematische Schnittansicht eines ersten Ausführungsbeispiels eines Sensors 1, mit dem gleichzeitig zwei Eigenschaften eines Gases gemessen werden können. Der Sensor 1 umfasst eine Messmembran 3. Die Messmembran 3 ist Teil einer Messmembranschicht 4, die auch als "device layer" 4 bezeichnet wird und auf einem Substrat 5 ausgebildet ist. Die Messmembranschicht 4 wird so lithografisch strukturiert, dass sie die Messmembran 3 und mehrere Bänder (in Figur 1 nicht dargestellt) ausbildet, die die Messmembran 3 mit der übrigen Messmembranschicht 4 verbinden. Zwischen den Bändern, mit denen die Messmembran 3 mit der übrigen Messmembranschicht 4 verbunden ist, sind Austauschöffnungen 7 ausgebildet, deren Funktion nachfolgend näher erläutert wird.

Die Bänder dienen zudem dazu, die Messmembran 3 an dem Substrat 5, auf dem die Messmembranschicht 4 aufgebracht ist, vorzuspannen. Um die Messmembran 3 vorzuspannen, wird die beispielsweise aus SiN gebildete Messmembranschicht 4 bei hohen Temperaturen von beispielsweise 800° C auf das Substrat 5 aufgedampft. Da die Messmembranschicht 4 aus SiN gebildet ist, hat sie einen höheren Ausdehnungskoeffizienten als das aus Si gebildete Substrat. Bei Abkühlen der Messmembranschicht 4 wird die Messmembran aufgrund der unterschiedlichen Ausdehnungskoeffizienten von device layer 4 und Substrat 5 vorgespannt. Die Messmembran 3 ist in dem Ausführungsbeispiel mit einer Zugspannung von 1 GPa an dem Substrat 5vorgespannt.

Der Sensor 1 umfasst weiterhin ein zweites Substrat 9, dass eine Koppelfläche 11 umfasst. Die Koppelfläche 11 erstreckt sich parallel zu einer Membranebene 13, in der die Messmembran 3 in Ruhe verläuft. Zwischen der Koppelfläche 11 und der Messmembran 3 ist ein Koppelvolumen 15 ausgebildet, dass mit dem Gas bzw. Gasgemisch befüllt ist, dessen erste und zweite Eigenschaft bestimmt werden. Das Gas ist dementsprechend mit einer auf die Koppelfläche 11 zuweisenden Oberfläche 17 der Messmembran 3 in Kontakt und kann durch die Austauschöffnungen 7 aus dem Koppelvolumen 15 heraus um die Umgebung 19 des Sensors 1 bzw. von der Umgebung 19 durch die Austauschöffnungen 7 in das Koppelvolumen 15 hineinströmen. Damit ist das Gas aber auch mit der von der Koppelfläche wegweisenden Oberfläche 20 der Messmembran 3 in Kontakt.

Ein Koppelabstand d zwischen der Messmembran 3 und der Koppelfläche 11 beträgt in der in Figur 1 dargestellten Ausführungsform zwischen 1 µm und 100 µm. Dieser Abstand wird in diesem Ausführungsbeispiel erreicht, indem zunächst ein erster Wafer hergestellt wird, der das Substrat 5 und die Messmembran 3 umfasst. Das Substrat wird dabei, wie bereits erläutert, typischerweise aus Silizium gebildet, während die Messmembran 3, die auch als device layer bezeichnet werden kann, ebenfalls aus Silizium oder Siliziumnitrid gebildet sein kann. Anschließend wird das Substrat 5 über einem Bereich 21, der in dem Ausführungsbeispiel eine Breite zwischen 100µm und 1cm aufweist, mittels Ätzen entfernt, sodass die Messmembran 3 und die Austauschöffnungen 7 frei liegen.

Der erste Wafer 23 wird anschließend mit einem zweiten Wafer 25 verbunden. Der zweite Wafer 25 umfasst das zweite Substrat 9, an dem die Koppelfläche 11 ausgebildet ist, sowie eine strukturierte Abstandsschicht 27, über die der Koppelabstand d zwischen der Koppelfläche und der auf die Koppelfläche 11 zuweisenden Oberfläche 17 der Messmembran 3 vorgegeben wird. Die Verbindung kann beispielsweise über Waferbonding hergestellt werden und ermöglicht die Bereitstellung eines ausreichend kleinen Spalts zwischen der Messmembran 3 und der Koppelfläche 11.

Um die erste und die zweite Eigenschaft des Gases zu messen, das in dem Koppelvolumen 15 und in der Umgebung 19 des Sensors vorhanden ist, wird die Messmembran 3 bei einer ihrer mechanischen Resonanzen zum Schwingen angeregt. Die Schwingung kann beispielsweise mechanisch erzeugt werden, indem der Sensor 1 oder eine mit dem Sensor verbundene Struktur, wie beispielsweise eine Vakuumkammer, in Schwingung versetzt werden. Alternativ kann die Messmembran 3 auch mittels eines gepulsten Lasers angeregt werden.

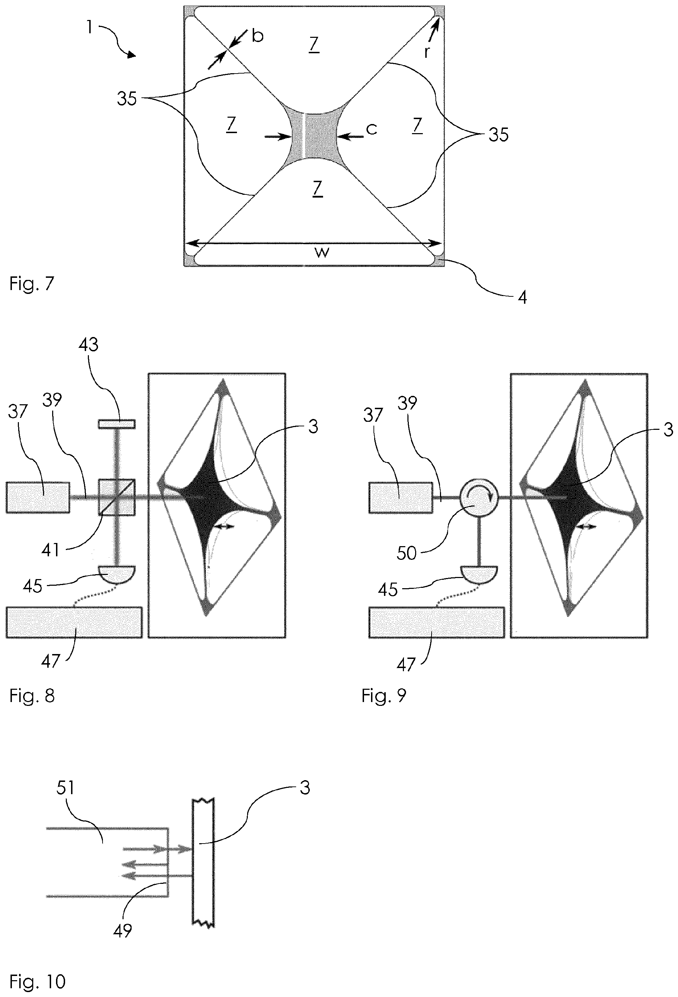

Die Schwingungsamplitude der Messmembran kann beispielsweise mittels eines Laserinterferometers ausgelesen werden, was nachfolgend näher bezugnehmend auf die Figuren 8 bis 10 erläutert werden wird. Nach der Anregung der Messmembran 3 wird die Abklingzeit der Schwingungsamplitude der Messmembran 3 gemessen, die proportional zum Inversen des Qualitätsfaktors der Messmembran 3 ist. Sowohl der Qualitätsfaktor bzw. die Abklingzeit und die Resonanzfrequenz der Messmembran 3 sind abhängig von dem Gas und dem Gasdruck in der Umgebung 19 und dem Koppelvolumen 15.

Die Abhängigkeit der Resonanzfrequenz vom Gasdruck entsteht durch die geringe Dicke des Koppelvolumens 15 senkrecht zur Membranebene 13, also aufgrund des kleinen Koppelabstands d. Durch die Vibration der Messmembran 3 ändert sich der Koppelabstand d periodisch. Dies führt entsprechend zu einer Volumenänderung im Koppelvolumen 15 und damit zu einem Druckgefälle zwischen dem Koppelvolumen 15 und der Umgebung 19 des Sensors 1. In der Folge bewegen sich Gasteilchen des Gases periodisch zwischen dem Koppelvolumen 15 und der Umgebung 19 des Sensors 1 hin und her. Hierdurch wird zu einem die Dämpfung der Schwingung der Messmembran 3 verstärkt, da durch die Bewegung der Gasteilchen zwischen dem Koppelvolumen 15 und der Umgebung 19 durch die Austauschöffnungen 7 Arbeit verrichtet wird. Dadurch können besonders geringe Gasdrücke gemessen werden.

Darüber hinaus ist aber auch die Resonanzfrequenz der Messmembran 3 in der in Figur 1 gezeigten Ausführungsform druckabhängig, da das schmale oder dünne Koppelvolumen 15, das auch als "squeezefilm" bezeichnet werden kann, eine Rückstellkraft auf die Messmembran 3 ausübt. Daher können bei gleichzeitiger Erfassung der Abklingzeit der angeregten Schwingung und der Resonanzfrequenz der Messmembran 3 zwei Eigenschaften des Gases bestimmt werden. Beispielsweise können bei einem Gas, das aus einer einzigen Sorte von Gasteilchen besteht, die Masse der Gasteilchen und der Gasdruck bestimmt werden. Handelt es sich um ein Gasgemisch mit unbekannten Bestandteilen, so kann der mittlere Druck des Gases und eine mittlere Masse der Gasteilchen bestimmt werden. Bei einem beispielhaften Gas aus zwei bekannten Bestandteilen, können die jeweiligen Partialdrücke der zwei bekannten Gase bestimmt werden.

Statt die Messmembran 3 von außen mechanisch, beispielsweise durch einen Piezo-Aktuator, oder optisch anzuregen, ist auch die Auswertung einer thermischen Anregung der Messmembran 3 zur Bestimmung der Eigenschaften des Gases möglich. Hierbei wird ausgenutzt, dass sich die gemäß der Brownschen Bewegung bewegenden Gasteilchen aus dem Koppelvolumen 15 und der Umgebung 19 des Sensors 1 zufällig auf die Messmembran 3 treffen und diese zum Schwingen anregen. Erfasst man die durch die thermische Anregung erzeugten Frequenzspektren, lassen sich sowohl die Resonanzfrequenzen als auch die Breiten der Spektren beobachten. Da die Breiten der Frequenzspektren proportional zum inversen Qualitätsfaktor sind, kann auch aus der thermischen Anregung wieder auf zwei Eigenschaften des Gases geschlossen werden.

Figur 2 zeigt ein zweites Ausführungsbeispiel eines Sensors 1 zur gleichzeitigen Messung zweier Eigenschaften eines Gases oder Gasgemisches. Das Ausführungsbeispiel eines Sensors 1 in Figur 2 unterscheidet sich von dem Ausführungsbeispiel eines Sensors 1 in Figur 1 lediglich in der Ausgestaltung des zweiten Wafers 25, der die Koppelfläche 11 bildet und der zusammen mit der Messmembran 3 bzw. der Membranschicht 4 das Koppelvolumen 15 umschließt. Nachfolgend wird das Ausführungsbeispiel in Figur 2 nur insoweit näher erläutert, wie es sich von dem Ausführungsbeispiel in Figur 1 unterscheidet. Im Übrigen wird auf die vorhergehenden Erläuterungen zu Figur 1 verwiesen.

Der zweite Wafer 25 in Figur 2 ist vollständig aus Silizium gefertigt und dabei unmittelbar so strukturiert, dass er das Koppelvolumen 15 und die Koppelfläche 11 ausbildet. Auf eine Abstandsschicht 27 wie in dem Beispiel in Figur 1 kann verzichtet werden, indem das Koppelvolumen 15 vollständig in den Wafer 25 hineingeätzt wird. Im Übrigen unterscheidet sich das Ausführungsbeispiel in Figur 2 weder in der Ausgestaltung noch in der Funktion als Sensor 1 von dem Ausführungsbeispiel in Figur 1.

Figur 3 zeigt ein weiteres Ausführungsbeispiel eines Sensors 1 zur gleichzeitigen Messung zweier Eigenschaften eines Gases. Wiederrum wird das Ausführungsbeispiel in Figur 3 nur insoweit erläutert, wie es sich von dem Ausführungsbeispiel in Figur 1 unterscheidet.

Im Ausführungsbeispiel in Figur 3 wird die Koppelfläche 11 nicht durch ein durchgängiges zweites Siliziumsubstrat 9 gebildet. Vielmehr wird der zweite Wafer 25 von einem Siliziumsubstrat 9 gebildet, das zusätzlich eine Koppelmembranschicht 29 aufweist, die entsprechend zur Messmembranschicht 4 ausgebildet ist, also eine Koppelmembran 31 ausbildet. Der zweite Wafer 25 umfasst zudem noch eine Abstandsschicht 27, über die der Koppelabstand d zwischen der Messmembran 3 und der die Koppelfläche 11 bildenden Koppelmembran 31 eingestellt wurde. Die Koppelmembranschicht 29 ist entsprechend zur Messmembranschicht 4 strukturiert, weist also auch eine an mehreren Bändern (in Figur 3 nicht dargestellt) aufgehängte Koppelmembran 31 auf. Diese Membran wurde ebenfalls bei Temperaturen von 800° C auf das zweite Substrat 9 aufgebracht, sodass die Koppelmembran 31 entsprechend zu der Messmembran 3 vorgespannt ist. Das zweite Substrat 9 wurde ebenfalls in einem Bereich 21 entfernt, sodass ein in der horizontalen Ebene symmetrischer Sensor 1 erzeugt wurde, der sowohl in der Messmembranschicht 4 als auch in der Koppelmembranschicht 29 Austauschöffnungen 7 aufweist.

Die Messmembran 3 und die Koppelmembran 31 in Figur 3 sind austauschbar. Es kann also sowohl das Schwingungsverhalten der Koppelmembran 31 als auch die der Messmembran 3 erfasst werden, um die zwei Eigenschaften des Gases zu bestimmen, das in der Umgebung 19 und dem Koppelvolumen 15 des Sensors 1 vorhanden ist.

In dem Ausführungsbeispiel ist zudem das Schwingungsverhalten von zwei strukturierten Membranen 3, 31 über die Koppelschicht 27 miteinander gekoppelt, da beide Membranen 3, 31 baugleich und der zwischen den beiden Membranen 3, 31 ausgebildete Quetschfilm dünn ist. Durch die Kopplung der beiden Membranen 3, 31 wird die Sensitivität Sensors 1 gesteigert, da beide Membranen 3, 31 zur Messung beitragen.

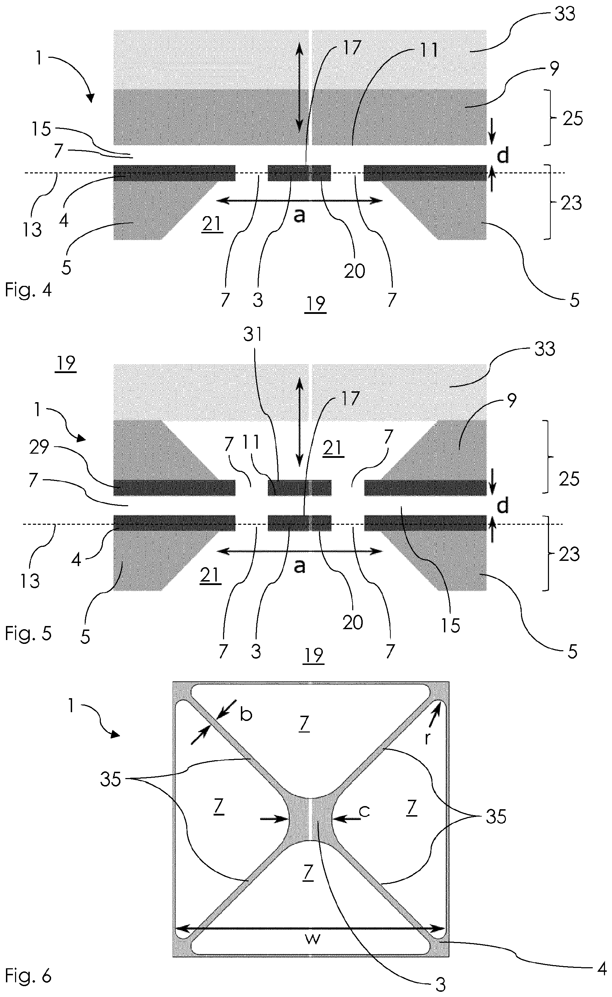

Figur 4 zeigt ein viertes Ausführungsbeispiel eines Sensors 1. Dieser Sensor 1 ist zur Messung von vier Eigenschaften eines Gases oder Gasgemisches vorgesehen, also von mehr als zwei Eigenschaften des Gases oder Gasgemisches. Um unnötige Wiederholungen zu vermeiden, werden lediglich die Unterschiede zu dem Ausführungsbeispiel in Figur 1 näher erläutert, da der in Figur 4 gezeigte Sensor dem Ausführungsbeispiel aus Figur 1 in vielen Aspekten gleicht.

In dem Ausführungsbeispiel in Figur 4 kann das zweite Substrat 9 relativ zu dem ersten Substrat 5 bzw. insbesondere der Messmembranschicht 4 derart verfahren werden, dass sich der Koppelabstand d zwischen der Koppelfläche 11 und der Oberfläche 17 der Messmembran 3, die auf die Koppelfläche 11 zugewandt ist, ändert. Um den Koppelabstand d verändern zu können, ist das zweite Substrat 9 an einem Positionierer 33 angeordnet, durch den der Koppelabstand d verändert werden kann. Geeignete Positionierer sind kommerziell erhältlich. Durch einen beispielhaften Positionierer kann der Koppelabstand d in einem Bereich von 1 µm bis 100 µm eingestellt werden. Da in dem Ausführungsbeispiel in Figur 4 keine Abstandsschicht 27 vorgesehen ist und die beiden Wafer 23, 25 nicht auf andere Weise miteinander verbunden sind, ist zwischen dem zweiten Substrat 9 und der Messmembranschicht 4 eine weitere umlaufende Austauschöffnung 7 ausgebildet, durch die Gas aus dem Koppelvolumen 15 in die Umgebung 19 des Sensors 1 ausströmen kann.

Durch Messungen bei verschiedenen Koppelabständen d lassen sich mehr als zwei Eigenschaftes des Gases oder Gasgemisches messen, dass in dem Koppelvolumen 15 und der Umgebung 19 des Sensors 1 vorhanden ist. Beispielsweise können bei einem Gas aus zwei Bestandteilen sowohl die Teilchenmassen als auch die Partialdrücke der Gasbestandteile bestimmt werden.

In Figur 5 wird ein weiteres Ausführungsbeispiel gezeigt, bei dem der Koppelabstand d zwischen der Messmembran 3 und der Koppelfläche 11 verändert werden kann. Dieses Ausführungsbeispiel baut auf dem Ausführungsbeispiel in Figur 3 auf, das heißt, als Koppelfläche 11 wird eine Koppelmembran 31 verwendet, die als Koppelmembranschicht 29 an einem zweiten Substrat 9 ausgebildet ist. Dieses zweite Substrat 9 ist an einem Positionierer 33 angeordnet, der dem bereits bezugnehmend auf das Ausführungsbeispiel in Figur 4 beschriebenen Positionierer entspricht. Im Übrigen entspricht das Ausführungsbeispiel in Figur 5 dem Ausführungsbeispiel in Figur 4 bzw. in Figur 3, sodass auf weitere Erläuterungen verzichtet wird.

Figur 6 zeigt eine Draufschicht auf ein Ausführungsbeispiel eines Sensors 1. Dabei ist insbesondere das Substrat 5 zu erkennen, in dessen Mitte die Messmembran 3 ausgebildet ist, die an dem Substrat 5 mittels vier Bändern 35 vorgespannt ist. Jeweils direkt zueinander benachbarte Bänder 35 sind im gleichen Winkelabstand zueinander angeordnet. Zwei Bänder 35 liegen einander jeweils gegenüber und zwischen den direkt benachbarten Bändern 35 sind jeweils Winkel von 90° ausgebildet. Der in Figur 6 gezeigte Sensor 1 könnte jeder in den Figuren 1 bis 5 gezeigte Sensor 1 sein.

Die Dicke der Messmembran 35 bzw. Messmembranschicht 4 senkrecht zur Membranebene 13 beträgt in dem Ausführungsbeispiel in Figur 6 100 nm. Die Dicke des ersten Substrats 5 senkrecht zur Messmembranebene beträgt 200 µm. Die Bänder 35 weisen eine Breite b von 21,5 µm auf und die Membran an ihrer schmalsten Stelle eine Breite c von 150 µm. Die Gesamtbreite w des Fensters in der Messmembranschicht 4 beträgt 1 mm und der Radius der Ecken im Übergang zwischen der Membranebene 4 und den Bändern 35 beträgt 25 µm. Die aus der Geometrie und einer Vorspannung von ungefähr ~ 1 GPa resultierende erste Resonanzfrequenz der Messmembran 3 ist 174 kHz..

In Figur 7 ist ein weiteres Beispiel eines Sensors 1 gezeigt, dass im Wesentlichen dem Beispiel in Figur 6 entspricht, allerdings andere Abmessungen aufweist. In diesem Ausführungsbeispiel beträgt die Dicke der Messmembran 3 bzw. der Messmembranschicht 4 senkrecht zur Messmembranebene 13 80 nm. Die Dicke des (ersten) Substrats 5 senkrecht zur Messmembranebene beträgt 200 µm. Die Bänder 35 weisen eine Breite b von 2 µm auf und die Membran an ihrer schmalsten Stelle eine Breite c von 500 µm. Die Gesamtbreite w des Fensters in der Messmembranschicht 4 beträgt 3 mm und der Radius der Ecken im Übergang zwischen der Membranebene 4 und den Bändern 35 beträgt 75 µm. Die aus der Geometrie und Vorspannung von ungefähr 1 GPa resultierende erste Resonanzfrequenz der Messmembran 3 ist 11 kHz.

In Figur 8 ist ein beispielhafter Aufbau einer Messanordnung dargestellt, mit der die Schwingungen einer Messmembran 3 erfasst werden können. In Figur 8 ist lediglich die Messmembran 3 dargestellt. Auf die übrigen Komponenten des Sensors 1 wurde verzichtet, um die Zeichnung einfach zu halten.

Die Messanordnung 36 umfasst einen Laser bzw. eine Laserquelle 37 die einen Laserstrahl 39 emittiert, der auf einem Strahlteiler 41 fällt. An dem Strahlteiler 41 wird ein erster Anteil des Laserstrahls 39 unter einem Winkel von 90° reflektiert und fällt auf einem Spiegel 43, der den Laserstrahl 39 vollständig reflektiert. Anschließend trifft der von dem Spiegel 43 reflektiert Laserstrahl 39 auf den Strahlteiler 41 Ein Anteil des Laserstrahls 39 wird von dem Strahlteiler 41 durchgelassen und fällt auf eine Photodiode 45 fällt. Der zweite, von dem Strahlteiler 41 zunächst nicht reflektierte Anteil des von der Laserquelle 37 emittierten Laserstrahls 39 fällt auf die Messmembran 3, wird von dieser reflektiert, sodass er wieder auf den Strahlteiler 41 fällt, von dieser unter einem Winkel von 90° reflektiert wird und schließlich von der Photodiode 45 erfasst wird.

Die in Figur 8 gezeigte Messanordnung 36 ist ein optisches Michelson-Interferometer, mit dem die Amplitude der Messmembran 3 aus der Differenz des von der Messmembran 3 und dem Spiegel 43 emittierten Laserstahls bestimmt werden kann. Zur Auswertung der an der Photodiode 45 aufgenommenen Signale ist eine Auswertungselektronik 47 vorgesehen, die beispielsweise ein Lock-In-Verstärker sein kann.

In Figur 9 ist ein zweites Ausführungsbeispiel einer Messanordnung 36 gezeigt, bei der an der Stelle des Strahlteilers 41 und des Spiegels 43 ein Faserzirkulator vorgesehen ist, mithilfe dessen ein faseroptisches Interferometer implementiert wird.

Wie in Figur 10 schematisch gezeigt ist, reflektiert hier ein Teil des von der Laserquelle 37 emittierten Lichtes an der Messmembran 3, während ein weiterer Teil an der Endfläche 49 der optischen Faser reflektiert wird. Die reflektierten Strahlanteile werden von dem Zirkulator 50 auf die Photodiode 45 weitergeleitet und von einer Auswertungselektronik 47, bei der es sich beispielsweise um einen Netzwerkanalysator oder einen Lock-In-Verstärker handeln kann, analysiert.

### Bezugszeichenliste

- 1: Sensor
- 3: Messmembran
- 4: Messmembranschicht
- 5: erstes Substrat
- 7: Austauschöffnungen
- 9: zweites Substrat
- 11: Koppelfläche
- 13: Membranebene
- 15: Koppelvolumen
- 17: Oberfläche Messmembran
- 19: Umgebung
- 20: Oberfläche Messmembran
- 21: Bereich
- 23: erster Wafer
- 25: zweiter Wafer
- 27: Abstandsschicht
- 29: Koppelmembranschicht
- 31: Koppelmembran
- 33: Positionierer
- 35: Band
- 36: Messanordnung
- 37: Laserquelle
- 39: Laserstrahl
- 41: Strahlteiler
- 43: Spiegel
- 45: Photodiode
- 47: Auswertungselektronik
- 49: Endfläche der Faser 51
- 50: Faserzirkulator
- 51: Faser
- b: Breite der Bänder
- c: Breite der Messmembran
- d: Koppelabstand
- r: Eckradius
- w: Fensterbreite

## Patentansprüche

1. Ein Sensor (1) zur gleichzeitigen Messung einer ersten Eigenschaft eines Gases und einer zweiten Eigenschaft des Gases mit einer nanomechanischen, vorgespannten Messmembran (3), die in dem Gas angeordnet und mit einem Substrat (5) verbunden ist,
wobei sich die Messmembran (3) in Ruhe in einer Membranebene (13) erstreckt, die in einem Koppelabstand (d) parallel zu einer Koppelfläche (11) verläuft, und sowohl auf einer der Koppelfläche (11) zugewandten Messmembranoberfläche (17) als auch auf einer von der Koppelfläche (11) abgewandten Messmembranoberfläche (20) mit dem Gas in Kontakt ist,
wobei ein Koppelvolumen (15) zwischen der Messmembran (3) und der Koppelfläche (11) mit dem Gas gefüllt und über zumindest eine Austauschöffnung (7) mit einer Umgebung des Substrats (5) verbunden ist, so dass durch die zumindest eine Koppelöffnung (7) Gas zwischen dem Koppelvolumen (15) und einer Umgebung (19) des Sensors (1) ausgetauscht werden kann,
wobei der Koppelabstand (d) zwischen der Messmembran (3) und der Koppelfläche (11) so gewählt wurde, dass aus einem Schwingungsverhalten der Messmembran (3) die erste Eigenschaft des Gases und die zweite Eigenschaft des Gases bestimmt werden können.

2. Sensor (1) nach Anspruch 1, wobei die Messmembran (3) mittels zwei oder mehr Bändern (35) mit dem Substrat (5) so verbunden ist, dass die zumindest eine Austauschöffnung (7) zwischen der Messmembran (3) und dem Substrat (5) ausgebildet ist.

3. Sensor (1) nach Anspruch 2, wobei die Messmembran (3) mittels vier Bändern (35) mit dem Substrat (5) verbunden ist, wobei sich jeweils zwei Bänder (35) von gegenüberliegenden Enden des Sensors (1) weg erstrecken.

4. Sensor (1) nach Anspruch 2 oder 3, wobei eine von jedem der Bänder (35) auf die Messmembran (3) ausgeübte Zugspannung zwischen 1 MPa und 10 GPa beträgt, wobei die von jedem der Bänder (35) auf die Messmembran (3) ausgeübte Zugspannung vorzugsweise 1 GPa beträgt.

5. Sensor (1) nach einem der vorhergehenden Ansprüche, wobei der Sensor (1) so konfiguriert ist, dass der Koppelabstand (d) verändert werden kann.

6. Sensor (1) nach einem der vorhergehenden Ansprüche, wobei der Koppelabstand (d) größer oder gleich 10 nm und kleiner oder gleich 1 mm ist und vorzugsweise größer oder gleich 10 µm und kleiner oder gleich 100 µm ist.

7. Sensor (1) nach einem der vorhergehenden Ansprüche, wobei die Messmembran (3) senkrecht zur Membranebene (13) eine Dicke zwischen 5 nm und 1 µm aufweist, wobei die Dicke der Messmembran (3) senkrecht zur Membranebene (13) vorzugsweise 20 nm beträgt.

8. Sensor (1) nach einem der vorhergehenden Ansprüche, wobei zur Bestimmung des Schwingungsverhaltens der Messmembran (3) Schwingungen der Messmembran (3) mittels eines Lasers erfasst werden.

9. Sensor (1) nach einem der vorhergehenden Ansprüche, wobei zur Bestimmung des Schwingungsverhaltens der Messmembran (3) Amplitude und Frequenz der Schwingungen der Messmembran (3) erfasst werden,
wobei zur Bestimmung des Schwingungsverhaltens vorzugsweise Amplitude und Frequenz mehrerer resonanter Schwingungsmoden erfasst werden.

10. Sensor (1) nach einem der vorhergehenden Ansprüche, wobei das Schwingungsverhalten mindestens eine Resonanzfrequenz der Messmembran (3) und eine Dämpfung der Messmembran (3) umfasst.

11. Sensor (1) nach einem der vorhergehenden Ansprüche, wobei der Sensor (1) so konfiguriert ist, dass zur Bestimmung des Schwingungsverhaltens der Messmembran (3) diese mechanisch und/oder mittels eines gepulsten Lasers angeregt werden kann, oder
wobei der Sensor (1) so konfiguriert ist, dass das Schwingungsverhalten aus einer thermischen Anregung der Messmembran (3) ermittelt werden kann.

12. Sensor (1) nach einem der vorhergehenden Ansprüche, wobei die erste Eigenschaft eine mittlere Teilchenmasse der Teilchen des Gases ist und die zweite Eigenschaft ein Druck des Gases ist oder
wobei das Gas aus einem ersten Partialgas und einem zweiten Partialgas besteht und wobei die erste Eigenschaft ein Partialdruck des ersten Partialgases ist und die zweite Eigenschaft ein Partialdruck des zweiten Partialgases ist.

13. Sensor (1) nach einem der vorhergehenden Ansprüche, wobei die Koppelfläche (11) von einer Oberfläche einer vorgespannten Koppelmembran (31) gebildet wird, die mit einem Koppelsubstrat (9) verbunden ist.

14. Sensor (1) nach Anspruch 13, wobei die Koppelmembran (31) mittels zwei oder mehr Bändern (35) so mit dem Koppelsubstrat (9) verbunden ist, dass zumindest eine Austauschöffnung (7) zwischen der Koppelmembran (31) und dem Koppelsubstrat (9) ausgebildet ist, durch die Gas zwischen dem Koppelvolumen (15) und der Umgebung (19) des Sensors (1) ausgetauscht werden kann.

15. Sensor (1) nach Anspruch 13 oder 14, wobei die Messmembran (3) und die Koppelmembran (31) im Wesentlichen identische Abmessungen aufweisen.

## Claims

1. A sensor (1) for the simultaneous measurement of a first characteristic of a gas and of a second characteristic of the gas with a nano-mechanical, pretensioned measuring membrane (3) which is arranged in the gas and is connected to the substrate (5), wherein the measuring membrane (3) at rest extends in a membrane plane (13) which runs parallel to a coupling surface (11) at a coupling distance (d), and is in contact with the gas at a measuring membrane surface (17) which faces the coupling surface (11) as well as at a measuring membrane surface (20) which is away from the coupling surface (11), wherein a coupling volume (15) between the measuring membrane (3) and the coupling surface (11) is filled with the gas and is connected to the environment of the substrate (5) via at least one exchange opening (7), so that gas can be exchanged between the coupling volume (15)and an environment (19) of the sensor (1) through the at least one exchange opening (7), wherein the coupling distance (d) between the measuring membrane (3) and the coupling surface (11) was selected such that the first characteristic of the gas and the second characteristic of the gas can be determined from an oscillation behaviour of the measuring membrane (3).

2. A sensor (1) according to claim 1, wherein the measuring membrane (3) is connected to the substrate (5) by way of two or more tapes (35) such that the at least one exchange opening (7) is formed between the measuring membrane (3) and the substrate (5).

3. A sensor (1) according to claim 2, wherein the measuring membrane (3) is connected to the substrate (5) by way of four tapes (35), wherein in each case two tapes (35) extend away from opposite ends of the sensor (1).

4. A sensor (1) according to claim 2 or 3, wherein a tensile stress which is exerted upon the measuring membrane (3) by each of the tapes (35) is between 1 MPa and 10 GPa, wherein the tensile stress which is exerted upon the measuring membrane (3) by each of the tapes (35) is preferably 1 GPa.

5. A sensor (1) according to one of the preceding claims, wherein the sensor (1) is configured such that the coupling distance (d) can be changed.

6. A sensor (1) according to one of the preceding claims, wherein the coupling distance (d) is larger than or equal to 10 nm and smaller than or equal to 1 mm and preferably larger than or equal to 10 µm and smaller than or equal to 100 µm.

7. A sensor (1) according to one of the preceding claims, wherein the measuring membrane (3) perpendicularly to the membrane plane (13) has a thickness between 5 nm and 1 µm, wherein the thickness of the measuring membrane (3) perpendicularly to the measuring membrane (3) is preferably 20 nm.

8. A sensor (1) according to one of the preceding claims, wherein oscillations of the measuring membrane (3) are detected by way of a laser for determining the oscillation behaviour of the measuring membrane (3).

9. A sensor (1) according to one of the preceding claims, wherein the amplitude and frequency of the oscillations of the measuring membrane (3) are detected for determining the oscillation behaviour of the measuring membrane (3), wherein preferably the amplitude and frequency of several resonant oscillation modes are detected for determining the oscillation behaviour.

10. A sensor (1) according to one of the preceding claims, wherein the oscillation behaviour comprises at least one resonant frequency of the measuring membrane (3) and a damping of the measuring membrane (3).

11. A sensor (1) according to one of the preceding claims, wherein the sensor (1) is configured such that for determining the oscillation behaviour of the measuring membrane (3), this can be excited mechanically and/or by way of a pulsed laser, or wherein the sensor (1) is configured such that the oscillation behaviour can be determined from a thermal excitation of the measuring membrane (3).

12. A sensor (1) according to one of the preceding claims, wherein the first characteristic is an average particle mass of the particles of the gas and the second characteristic is a pressure of the gas or wherein the gas consists of a first partial gas and a second partial gas and wherein the first characteristic is a partial pressure of the first partial gas and the second characteristic is a partial pressure of the second partial gas.

13. A sensor (1) according to one of the preceding claims, wherein the coupling surface (11) is formed by a surface of a pretensioned coupling membrane (31) which is connected to a coupling substrate (9).

14. A sensor (1) according to claim 13, wherein the coupling membrane (31) is connected to the coupling substrate (9) by way of two or more tapes (35) such that at least one exchange opening (7) is formed between the coupling membrane (3) and the coupling substrate (9), through which 19 exchange opening the gas can be exchanged between the coupling volume (15) and the environment (19) of the sensor (1).

15. A sensor (1) according to claim 13 or 14, wherein the measuring membrane (3) and the coupling membrane (31) have essentially identical dimensions.

## Revendications

1. Capteur (1) pour la mesure simultanée d'une première propriété d'un gaz et d'une deuxième propriété du gaz avec une membrane de mesure (3) précontrainte de façon nanomécanique, qui est disposée dans le gaz et est reliée à un substrat (5), sachant que la membrane de mesure (3) s'étend au repos dans un plan de membrane (13), qui passe dans un intervalle d'accouplement (d) parallèlement à une surface d'accouplement (11), et qui est en contact avec le gaz aussi bien sur une surface de membrane de mesure (17) tournée vers la surface d'accouplement (11) que sur une surface de membrane de mesure (20) éloignée de la surface d'accouplement (11), sachant qu'un volume d'accouplement (15) est rempli de gaz entre la membrane de mesure (3) et la surface d'accouplement (11) et est relié par au moins une ouverture d'échange (7) à un entourage du substrat (5) de telle manière que par au moins une ouverture d'accouplement (7) le gaz peut être échangé entre le volume d'accouplement (15) et un entourage (19) du capteur (1), sachant que l'intervalle d'accouplement (d) entre la membrane de mesure (3) et la surface d'accouplement (11) a été choisi de telle manière que la première propriété du gaz et la deuxième propriété du gaz peuvent être déterminées à partir d'un comportement vibratoire de la membrane de mesure (3).

2. Capteur (1) selon la revendication 1, sachant que la membrane de mesure (3) est reliée au substrat (5) au moyen de deux ou plusieurs bandes (35) de telle sorte qu'au moins une ouverture d'échange (7) est constituée entre la membrane de mesure (3) et le substrat (5).

3. Capteur (1) selon la revendication 2, sachant que la membrane de mesure (3) est reliée au substrat (5) au moyen de quatre bandes (35), sachant que deux bandes (35) s'éloignent respectivement des extrémités opposées du capteur (1).

4. Capteur (1) selon la revendication 2 ou 3, sachant qu'une contrainte de traction exercée sur la membrane de mesure (3) par chacune des bandes (35) se situe entre 1 MPa et 10 GPa, sachant que la contrainte de traction exercée par chacune des bandes (35) sur la membrane de mesure (3) est de préférence 1 GPa.

5. Capteur (1) selon l'une quelconque des revendications précédentes, sachant que le capteur (1) est configuré de telle sorte que l'intervalle d'accouplement (d) peut être modifié.

6. Capteur (1) selon l'une quelconque des revendications précédentes, sachant que l'intervalle d'accouplement (d) est supérieur ou égal à 10 nm et inférieur ou égal à 1 mm et de préférence supérieur ou égal à 10 µm et inférieur ou égal à 100 µm.

7. Capteur (1) selon l'une quelconque des revendications précédentes, sachant que la membrane de mesure (3) comporte perpendiculairement au plan de membrane (13) une épaisseur se situant entre 5 nm et 1 µm, sachant que l'épaisseur de la membrane de mesure (3) est de préférence 20 nm perpendiculairement au plan de membrane (13).

8. Capteur (1) selon l'une quelconque des revendications précédentes, sachant que pour déterminer le comportement vibratoire de la membrane de mesure (3), les vibrations de la membrane de mesure (3) sont saisies au moyen d'un laser.

9. Capteur (1) selon l'une quelconque des revendications précédentes, sachant que pour déterminer le comportement vibratoire de la membrane de mesure (3), l'amplitude et la fréquence des vibrations de la membrane de mesure (3) sont saisies, sachant que pour déterminer le comportement vibratoire, l'amplitude et la fréquence de plusieurs modes de vibrations ré-sonants sont de préférence saisies.

10. Capteur (1) selon l'une quelconque des revendications précédentes, sachant que le comportement vibratoire comprend au moins une fréquence de résonance de la membrane de mesure (3) et un amortissement de la membrane de mesure (3).

11. Capteur (1) selon l'une quelconque des revendications précédentes, sachant que le capteur (1) est configuré de telle manière que pour déterminer le comportement vibratoire de la membrane de mesure (3), celle-ci peut être excitée de façon mécanique et/ou au moyen d'un laser pulsé, ou sachant que le capteur (1) est configuré de telle sorte que le comportement vibratoire peut être déterminé à partir d'une excitation thermique de la membrane de mesure (3).

12. Capteur (1) selon l'une quelconque des revendications précédentes, sachant que la première propriété est une masse particulaire moyenne des particules du gaz et la deuxième propriété une pression, du gaz, ou sachant que le gaz est composé d'un premier gaz partiel et d'un deuxième gaz partiel et sachant que la première propriété est une pression partielle du premier gaz partiel et la deuxième propriété une pression partielle du deuxième gaz partiel.

13. Capteur (1) selon l'une quelconque des revendications précédentes, sachant que la surface d'accouplement (11) est formée par une surface d'une membrane d'accouplement (31) précontrainte, qui est reliée à un substrat d'accouplement (9).

14. Capteur (1) selon la revendication 13, sachant que la membrane d'accouplement (31) est reliée au moyen de deux ou plusieurs bandes (35) au substrat d'accouplement (9) de telle sorte qu'au moins une ouverture d'échange (7) est constituée entre la membrane d'accouplement (31) et le substrat d'accouplement (9) par laquelle le gaz peut être échangé entre le volume d'accouplement (15) et l'entourage (19) du capteur (1).

15. Capteur (1) selon la revendication 13 ou 14, sachant que la membrane de mesure (3) et la membrane d'accouplement (31) comportent pour l'essentiel des dimensions identiques.
